# EUROPEAN PATENT SPECIFICATION

(11) **EP 3 861 845 B1**
(45) Date of publication and mention of the grant of the patent: **19.03.2025**
(21) Application number: 21164965.2
(22) Date of filing: 14.10.2016
(51) Int. Cl.: A01D 34/412, F16B 7/14, A01D 34/00, A01D 34/90, A01D 34/416

(54) **LINE TRIMMER**
FADENSCHNEIDER
TONDEUSE À FIL

(43) Date of publication of application: 11.08.2021
(62) Divisional of application: 16918748.1
(73) Proprietor: Techtronic Outdoor Products Technology Limited, Hamilton HM12 (BM)
(72) Inventor: Lam, Kwok Fan, Kwai Chung (HK); Lin, Hui, Dongguan City, Guangdong (CN); Peng, Zhi Gang, Dongguan City, Guangdong (CN)
(74) Representative: Novagraaf Group

(56) References cited:
- EP-A1- 3 056 075
- CN-U- 204 860 062
- JP-A- 2007 225 054
- US-A1- 2015 139 717
- US-A1- 2015 282 425
- US-B1- 8 590 166

## Description

### FIELD OF THE INVENTION

The present invention relates to a line trimmer. More specifically, the present invention relates to a line trimmer with one or more different features.

### BACKGROUND

Line trimmers, sometimes commonly-referred to as "weed wackers", are used for the trimming and sometimes the edging of lawns, light foliage, and their respective boundaries. Line trimmers typically employ a flexible nylon (or other plastic) cutting line connected to a rotating head which rotates at a high rate of speed so as to cut the vegetation. Such line trimmers may contain either an electric-powered or gas-powered engine which powers the rotating head either directly or indirectly.

CN 204 860 062 U discloses a lawn mower comprising a length-adjustable handrail bar, a lawnmower body fixed at the lower end of the handrail bar and a transport wheel frame equipped with a transport wheel. The lawnmower body comprises a motor base to which a motor is fixed. The motor comprises an output shaft having a fixing seat, which is fixedly coupled with a blade. A fixing position of the motor base is adjustable and the cutting angle of the blade can be adjusted accordingly. Furthermore, the lawnmower body comprises a safety cover for clamping the blade to the lawnmower body. A blade guard is snapped on to the motor base. Furthermore, the lower end of the handrail bar is pivotally connected to the lawnmower body and the angle between the handrail bar and the lawnmower body can be adjusted by pressing or releasing a lock button.

Recently, additional features have been included in such line trimmers, such as replaceable heads, auto-feeding heads, telescoping handles, pivoting heads, and the like. Current telescoping heads require the turning of a screw, wing nut, or other type of screw-type device which holds a pole formed of of concentric tubes in place via friction caused by the screw against a portion of the inner pole. However, it has been found that such mechanisms may be difficult /complicated to assemble, requiring multiple screws and parts. Such a mechanism may also be difficult for certain users, especially by those having small hands, and/or arthritic users, and it is often unclear whether or not the screw (s) has been tightened enough. If it/they are not tightened enough, then the cutting head may move during use which could be dangerous to the user or others nearby.

Some line trimmers contain a rotating head to allow the trimmer to also be used as an edging tool for the boundaries of grass or foliage. For example, to cut grass at the edges of a sidewalk, driveway, etc. Such a line trimmer often contains a rotating head, only. However, it has been found that the mechanisms for such a rotating head are often complicated and difficult to use, and/or confusing to the user. Or, the user is instructed to employ a pivoting head, and then to rotate the line trimmer along its pole axis to use it as an edging tool. Such a situation could be dangerous, as the line trimmer may be unwieldy when turned in such a manner.

Line trimmers typically contain safety features which protect the user from grass, foliage, sticks, rocks, etc. that are kicked up by the rapidly rotating cutting line. A typical safety feature is therefore a tool guard which is often a circular or semi-circular (i.e., arc- shaped) shield attached above the cutting line which physically blocks flying debris from hitting the user. This tool guard may completely or partially-cover the cutting line. Such tool guards are typically permanently-affixed to the motor housing at various places with, for example, permanent adhesives, screws, etc. In an alternative, the tool guard may be permanently moulded into the engine housing. However, such a complicated manufacturing requires either significant effort and time during manufacturing and/or a specialized mould which makes maintenance much more difficult.

Accordingly, it has been found that there remains a need for an improved mechanism to adjust the trimming head's orientation.

### SUMMARY OF THE INVENTION

The present invention relates to a trimming tool having a pole, a trimmer head, and an adjustment mechanism. The pole contains a second pole end, also referred to as distal pole end, a handle at the second pole end, and a first pole end, also referred to as proximal pole end opposite the handle. The pole also contains a pole axis running the length of the pole. The trimmer head has an electric motor, a cutting tool operatively-connected to the electric motor, and a housing surrounding the electric motor. The adjustment mechanism connects the pole to the trimmer head and contains a releasably-lockable rotational mechanism and a releasably-lockable pivoting mechanism. The releasably-lockable rotational mechanism allows the trimmer head to rotate about the pole axis of the pole, and the releasably-lockable pivoting mechanism allows the adjustment of the angle between the trimmer head and the pole.

Without intending to be limited by theory it is believed that such an adjustment mechanism is safer, and easier to use than existing mechanisms. The lockability of both the rotational and pivoting actions helps to prevent accidents.

An embodiment of the present invention relates to a trimming tool having a pole, a trimmer head, and a tool guard with a snap-fit fastener. The pole contains a second pole end, also referred to as distal pole end having a handle, and a first pole end, also referred to as proximal pole end opposite the handle. The trimmer head contains an electric motor, a cutting tool operatively-connected to the electric motor, and a housing surrounding the electric motor. The trimmer head is attached to the first end of the pole, and the tool guard is attached to the trimmer head via the snap-fit fastener.

An embodiment of the present invention relates to a method for attaching a tool guard to a trimming tool having the steps of providing a trimming tool having a trimmer head having a housing, and wherein the housing has a clip, providing a tool guard having a fixture hole, and affixing the tool guard to the housing by inserting the clip into the fixture hole.

Without intending to be limited by theory, it is believed that the present invention allows for the quick and easy attachment of a tool guard to a trimming tool with minimal or even no attachment tools. Such a tool guard may be securely attached thereby speeding up production.

An embodiment of the present invention relates to a trimming tool comprising a lockable, telescoping tube having an outer tube, an inner tube, a friction block and a pressure latch. The outer tube has an outer tube first end, also referred to as proximal outer tube end and an outer tube second end, also referred to as distal outer tube end opposite the outer tube first end. The inner tube has an inner tube first end, also referred to as proximal inner tube end and an inner tube second end, also referred to as distal inner tube end opposite the inner tube first end. The inner tube first end is slidably-inserted into the outer tube first end. A lower coupler is external to the outer tube first end. A shaft shield is attached to the inner tube first end via a snap-fit closure, and the shaft shield is slidably-inserted into both the outer tube first end and a lower coupler. An upper coupler is external to the inner tube. The shaft shield is physically blocked from passing into the upper coupler. The upper coupler is affixed to the lower coupler via a snap-fit closure, and the upper coupler is also affixed to the outer tube fitst end via a snap-fit closure. A pivot axis connects the upper coupler and the lower coupler. The friction block protrudes from the upper coupler and/or the lower coupler. The friction block is also releasably-pressable against the inner tube. The pressure latch at least partially encloses the pivot axis. When the pressure latch is closed it physically presses the friction block against the inner tube so as to restrict movement of the inner tube. When the pressure latch is open the friction block releases pressure from the inner tube thereby allowing the inner tube to slidably-move.

Without intending to be limited by theory, it is believed that such a telescoping tube is both quick and easy to manufacture, due to the snap-fit-closures. Furthermore, it is believed that when the pressure latch is closed, the pressure latch sufficiently presses the friction block so as to substantially prevent sliding of the inner tube within the outer tube. However, when the pressure lock is open, the friction block does not significantly press against the inner tube and therefor the inner tube may easily slide within the outer tube.

Additional benefits may also be found with the present invention and/or combinations of the features describe herein.

### BRIEF DESCRIPTION OF THE DRAWINGS

Fig. 1 shows an exploded view of an embodiment of the lockable, telescoping tube used in a trimming tool of the present invention;
Fig. 2 shows an open configuration of an embodiment of the lockable, telescoping tube of Fig. 1;
Fig. 3 shows a closed configuration of an embodiment of the lockable, telescoping tube of Fig. 1;
Fig. 4 shows a cut-away side view of the pressure latch as seen along line 4-4 in Fig. 1;
Fig. 5 shows a partially-cut-away side view of an embodiment of a trimming tool of the present invention;
Fig. 6 shows a bottom perspective view an embodiment of the housing of the present invention;
Fig. 7 shows a bottom perspective view of an embodiment of the tool guard of the present invention;
Fig. 8 shows a bottom perspective view of an embodiment of the tool guard of the present invention;
Fig. 9 shows a bottom perspective view of an embodiment of the tool guard being attached to the trimmer head of the present invention;
Fig. 10 shows a side view of an embodiment of the pivoting mechanism; and
Fig. 11 shows a top perspective view of an embodiment of the pivoting mechanism and the rotational mechanism.

The figures herein are for illustrative purposes only and are not necessarily drawn to scale.

### DESCRIPTION OF THE PREFERRED EMBODIMENTS

Unless otherwise specifically provided herein, all measurements are made in metric units. Furthermore, all percentages, ratios, etc. herein are by weight, unless specifically indicated otherwise. Unless otherwise specifically indicated, all individual components herein may be fabricated formed/made/constructed of standard materials in known in the art, and according to methods known in the art.

### Lockable, Telescoping Tube

An embodiment of the present invention relates to a trimming tool with an adjustment mechanism and a lockable, telescoping tube having an outer tube, an inner tube, a friction block and a pressure latch. The outer tube has an outer tube first end, also referred to as proximal outer tube end and an outer tube second end, also referred to as distal outer tube end opposite the outer tube first end. The inner tube has an inner tube first end, also referred to as proximal inner tube end and an inner tube second end, also referred to as distal inner tube end opposite the inner tube first end. The inner tube first end is slidably-inserted into the outer tube first end. A lower coupler is external to the outer tube first end. A shaft shield is attached to the inner tube first end via a snap-fit closure, and the shaft shield is slidably-inserted into both the outer tube first end and a lower coupler. An upper coupler is external to the inner tube. The shaft shield is physically blocked from passing into the upper coupler. The upper coupler is affixed to the lower coupler via a snap-fit closure, and the upper coupler is also affixed to the outer tube first end via a snap-fit closure. A pivot axis connects the upper coupler and the lower coupler. The friction block protrudes from the upper coupler and/or the lower coupler. The friction block is also releasably-pressable against the inner tube. The pressure latch at least partially encloses the pivot axis. When the pressure latch is closed it physically presses the friction block against the inner tube so as to restrict movement of the inner tube. When the pressure latch is open the friction block releases pressure from the inner tube thereby allowing the inner tube to slidably-move.

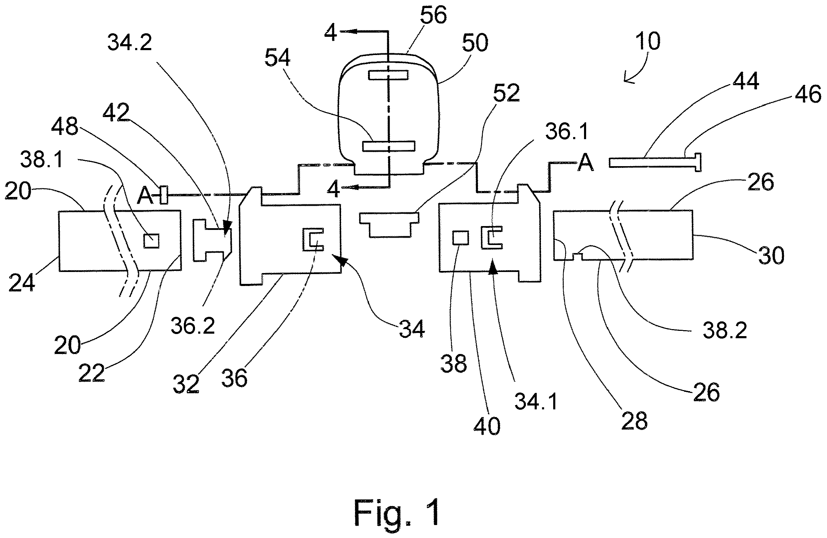

Turning to the figures, Fig. 1 shows an exploded view of an embodiment of the lockable, telescoping tube, 10, of the present invention. The lockable, telescoping tube, 10, contains an outer tube, 20, having an outer tube first end 22, also referred to as proximal outer tube end and an outer tube second end 24, also referred to as distal outer tube end opposite the outer tube first end, 22. The lockable, telescoping tube, 10, also contains an inner tube, 26 which has an inner tube first end 28, also referred to as proximal inner tube end and an inner tube second end 30, also referred to as distal inner tube end opposite the inner tube first end, 28.

The inner tube, 20, and the outer tube, 26, are typically made from, for example, a metal, a plastic, or a combination thereof; or a metal; or steel, or aluminum. The inner tube is typically smaller in diameter than the outer tube and is therefore slidably-insertable into the outer tube. The inner tube and the outer tube typically have a round; or substantially round cross-sectional shape. If the inner tube and outer tubs do not both have a round cross-sectional shape, then the inner tube typically has a similar cross-sectional shape and is slidably-insertable into the outer tube. In an embodiment herein, the outer tube and/or the inner tube contains a ridge or other shape so as to prevent rotation and/or twisting of the two tubes relative to each other.

In Fig. 1, the inner tube first end, 28, is slidably-inserted into the outer tube first end, 22. A lower coupler, 32, is external to the inner tube first end, 28, and the inner tube first end, 28, is also slidably-inserted the lower coupler, 32. The lower coupler, 32, contains a snap-fit closure, 34. In Fig. 1, the snap-fit closure, 34, is formed from a tab, 36, on the lower coupler, 32, which snaps into a fixture hole, 38, on an upper coupler, 40. The upper coupler, 40, therefore partially fits into the lower coupler, 32. The upper coupler, 40, further contains another snap-fit closure, 34.1, containing a tab, 36.1, which fits into a fixture hole, 38.1, near the outer tube first end, 22. When the outer tube first end, 22, is inserted into the upper coupler, 40, the tab, 36.1, snaps into the fixture hole, 38.1, thereby securely fastening the upper coupler, 40, to the outer tube, 20. Thus, the upper coupler, 40, is attached to both the outer tube, 20, and the lower coupler, 32, via snap-fit closures, 34, 34.1. Once assembled, the outer tube, 20, is typically intended to be permanently-fastened to the upper coupler, 40, and the upper coupler, 40, is intended to be permanently-fastened to the lower coupler, 32. Thus, these three parts typically may not be separated unless one or more of the tabs, 36, 36.1, is broken.

The upper coupler, 40, is external to at least a portion of the inner tube, 26, typically the inner tube first end, 28. In an embodiment herein, the lower coupler, 32, is external to the upper coupler, 40, the outer tube first end, 22, and the inner tube, 26, and typically the inner tube first end, 28.

A shaft shield, 42, is attached to the inner tube first end, 28 via a snap-fit closure, 34.2. The tab, 36.2, on the shaft shield, 42, fits into a fixture hole, 38.2, near the inner tube first end, 28. The shaft shield, 42, is slidably-inserted into both the tube outer first end, 28, and the lower coupler, 32. The tab, 36.2, on the shaft shield, 42, is intended to permanently-fasten the shaft shield, 42, to the outer tube first end, 28. Thus, these two parts typically may not be separated unless the tab, 36.2, is broken.

The lower coupler, 32 is also external to the shaft shield, 42. Accordingly in the embodiment of Fig. 1, going from the outside to the inside, one would encounter in order, the lower coupler, 32, as the outermost piece, the upper coupler, 40, the outer tube, 20, inner tube, 26, and finally the shaft shield, 42 as the innermost piece.

A pivot axis, 44, connects the upper coupler, 40, and the lower coupler, 32. In the embodiment of Fig. 1, the pivot axis is a screw, 46, which is fastened with a nut, 48, through the upper coupler, 40, a pressure latch, 50, and then through the lower coupler, 32, as seen along line A-A. The pressure latch, 50, at least partially encloses; or substantially encloses; or encloses; the pivot axis, 44. The pivot axis allows the pressure latch, 50, to rotate open and closed.

A friction block, 52, is provided and protrudes from the upper coupler, 40, and/or the lower coupler, 32. The friction block, 52, is releasably-pressable against the inner tube, 26, to prevent it from moving. Specifically, in Fig. 1, when the pressure latch, 50, is closed, then a protrusion, 54, on the pressure latch, 50, physically presses the friction block, 52, against the inner tube, 26 and thereby restricts the movement of the inner tube, 26, preventing it from moving relative to the outer tube, 20, the lower coupler, 32, the upper coupler, 40, the pressure latch, 50, and the friction block, 54. However, when the pressure latch, 50, is open, then the protrusion, 54, does not press against the friction block, 52, and therefore the friction block, 52, releases the pressure from the inner tube, 26, allowing it to slidable-move relative to the outer tube, 20, the lower coupler, 32, the upper coupler, 40, the pressure latch, 50, and the friction block, 54. This moving of the inner tube, 26, relative to the outer tube, 20, allows the total length of the two (inner and outer) tubes to expand or contract, which defines a telescoping tube.

The pressure latch, 50, further contains a finger tab, 56, which allows the user to easily lift the pressure latch, 50, when it is closed, so as to open the pressure latch, 50.

Without intending to be limited by theory, it is believed that this type of pressure latch is more easily opened and closed than a screw-type or wing-nut type of pressure fastener. Therefore, it is believe that the mechanism herein described is significantly easier for the user, especially an arthritic user, to use as the leverage is easier to apply as compared to a turning screw. Furthermore, it is believed that a user easily understands when such a mechanism is completely locked and the tubes are firmly locked together, as compared to a screw-type mechanism.

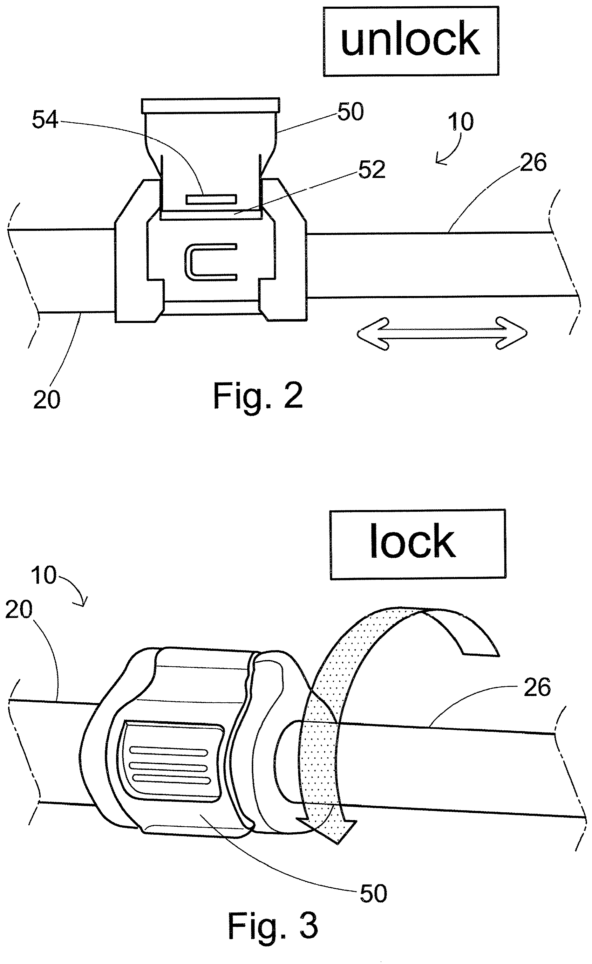

Fig. 2 shows an open and unlocked configuration of an embodiment of the lockable, telescoping tube, 10, of Fig. 1. As can be seen, when the pressure latch, 50, is open then the protrusion, 54, does not touch the friction block, 52. This releases the pressure on the inner tube, 26, and allows the inner tube, 26, to slidably-move relative to the outer tube, 20, in the direction of the arrow.

Fig. 3 shows a closed and locked configuration of an embodiment of the lockable, telescoping tube, 10, of Fig. 1 When the pressure latch, 50, is closed and therefore in a locked position, the protrusion (see Fig. 2 at 54) presses against the friction block (see Fig. 2 at 52) and prevents the inner tube, 26, from slidably-moving relative to the outer tube, 20.

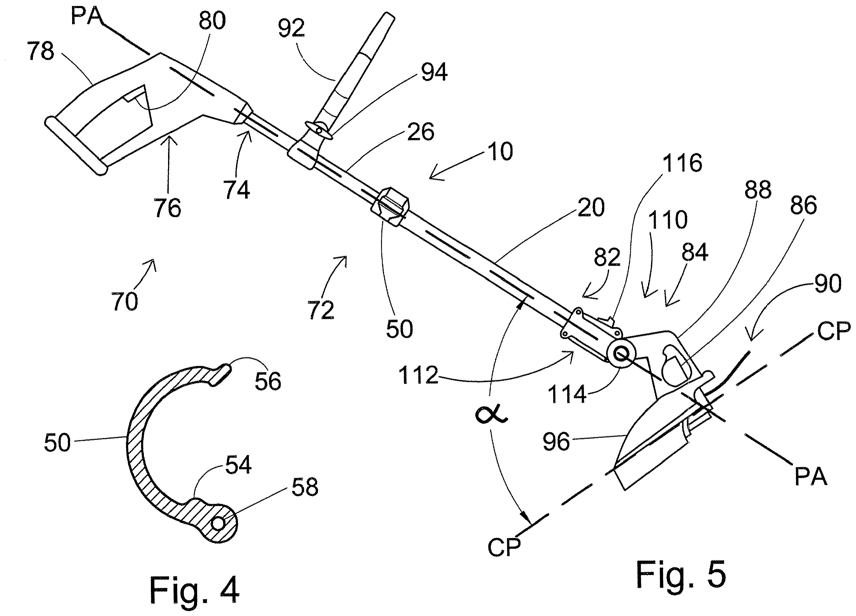

Fig. 4 shows a cut-away side view of the pressure latch, 50, as seen along line 4-4 in Fig. 1. The pressure latch, 50, contains a protrusion, 54, as well as a finger tab, 56, at one end of the pressure latch, 50. At the opposite end of the pressure latch, 50, from the finger tab, 56, is a latch hole, 58, through which the pivot axis (see Fig 1 at 44) , extends. When the pressure latch, 50, is rotated from being closed to being open, the axis of rotation is along the latch hole, 58 and the pivot axis (see Fig. 1 at 44).

### Trimming Tool

An embodiment of the present invention relates to a trimming tool with an adjustment mechanism having a pole, a trimmer head, and a tool guard. The pole contains a second pole end, also referred to as distal pole end having a handle, and a first pole end, also referred to as proximate pole end opposite the handle. The trimmer head contains an electric motor, a cutting tool operatively-connected to the electric motor, and a housing surrounding the electric motor. The trimmer head is connected to the first pole end. The tool guard has a snap-fit fastener and the tool guard is attached to the trimmer head via the snap-fit fastener.

Fig. 5 shows a partially-cut-away side view of an embodiment of a trimming tool, 70, of the present invention. The trimming tool, 70, has a pole, 72, which in this embodiment is a lockable, telescoping tube, 10. The pole, 72, contains a second pole end 74, also referred to as distal pole end, to which is attached a handle, 76. The handle, 76, contains a handle grip, 78, with which the user holds the trimming tool, 70. The handle grip, 78, also contains a trigger, 80, which activates the trimming tool, 70.

The pole, 70, also contains a first pole end 82, also referred to as proximal pole end, opposite the second pole end, 74, and the handle, 76. A trimmer head, 84, is attached to the first pole end, 82. The trimmer head, 84, contains an electric motor, 86, therein. The trimmer head, 84 contains a housing, 88, which surrounds the electric motor, 86. Furthermore, a cutting tool, 90, is operatively-connected to the electric motor, 86. In an embodiment herein, the cutting tool is a line, such as a plastic line, a nylon line, a metal wire; or a plastic line; or a nylon line.

The pole, 70, contains the outer tube, 20, the inner tube, 26, and the pressure latch, 50, as previously-described. In addition, an optional auxiliary handle, 92, is attached to the pole, 72, via a knob, 94. The knob, 94, is typically adjustable, such as via an optional wing nut or a finger nut, which allows the user to adjust the angle of the auxiliary handle, 92, to suit the user's preference, height, etc. The auxiliary handle may be either removable from the pole, or may be permanently-attached to the pole. Furthermore, the position of the auxiliary handle on the pole may be either adjustable, or fixed.

Fig. 5 also shows a tool guard, 96, attached to the trimmer head, 84, and in this case is attached to the housing, 84. The tool guard is intended to protect the user from items such as grass, twigs, rocks, and other debris which may be kicked up by the cutting tool. The tool guard, the housing, and the trimmer head is typically formed of a plastic, a resin, or other material which is easily formed and/or moulded into complex shapes.

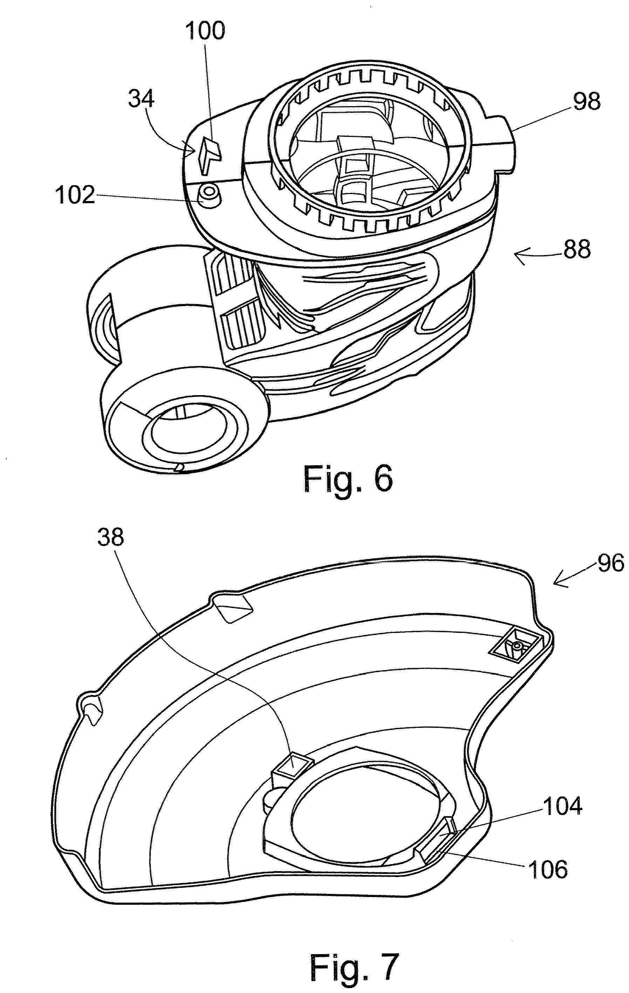

Fig. 6 shows a bottom perspective view an embodiment of the housing, 88, having a buckle, 98. The buckle, 98, protrudes from the housing, 88, and helps to secure the tool guard (see Figs. 5, 7 at 96) in place. The housing, 88, further contains a snap-fit closure, 34, which consists of a clip, 100, which protrudes from the housing, and a fixture hole (See Fig. 7 at 38). The housing, 88, also contains an assist boss, 102, which helps to align the tool guard (see Figs. 5, 7 at 96) thereupon.

Fig. 7 shows a bottom perspective view of an embodiment of the tool guard, 96, useful herein. The tool guard, 96, contains a buckle hole, 104, through which the buckle (see Fig. 6 at 98) is inserted. The tool guard further contains a fixture hole, 38, through which the clip (see Fig. 6 at 100) is inserted so as to lock; or securely lock, the tool guard, 96, in place. The tool guard, 96, further contains a rubber block, 106, at the buckle hole, 104, to provide a more secure closure, In an embodiment of the present invention, the rubber block also helps to reduce vibrations and/or noise during use. In the embodiment in Fig. 7, the trimmer head (see Fig. 5 at 84); or the housing (see Fig. 6 at 88) is attached to the tool guard, 96, without any screws or rivets.

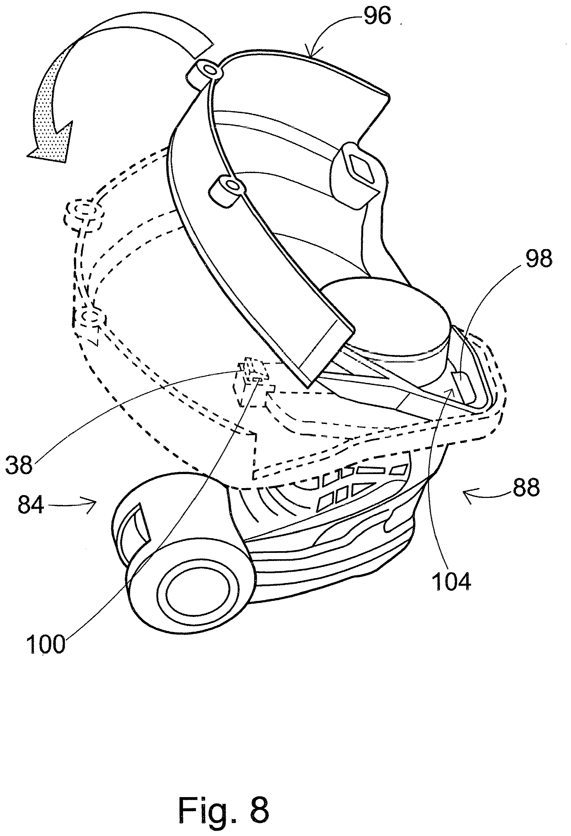

Fig. 8 shows a bottom perspective view of an embodiment of the tool guard, 96, and trimmer head, 88, of the present invention. As can be seen, during assembly the buckle, 98, is inserted into the buckle hole, 104, and then the tool guard, 96, is rotated towards the trimmer head, 84, such that the clip, 100, snaps into the fixture hole, 38, to lock the tool guard, 96, into place.

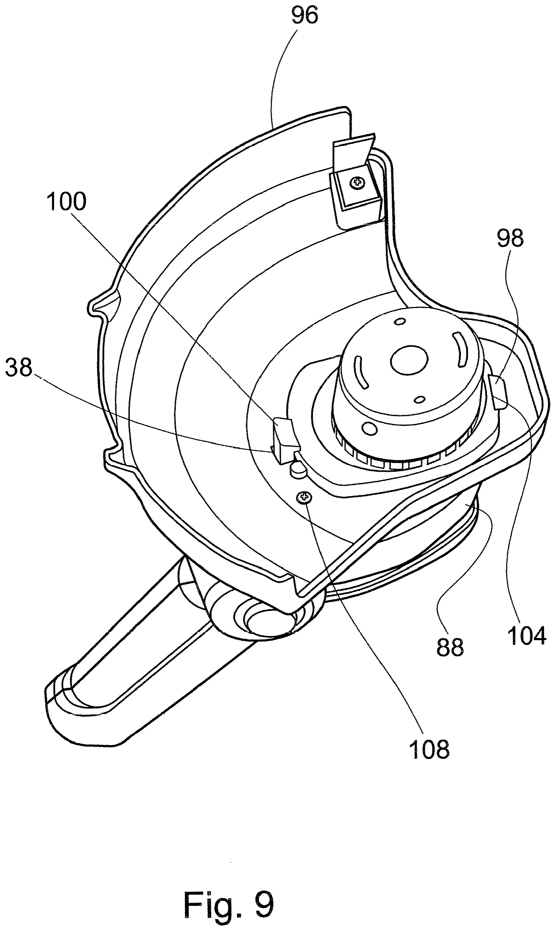

Fig. 9 shows a bottom perspective view of an embodiment of the tool guard, 96, attached to the trimmer head, 88, of the present invention. The buckle, 98 can be seen protruding from the buckle hole, 104, and the clip, 100, can be seen protruding from the fixture hole, 38, and thereby securing the tool guard, 96, in place. In addition, an optional screw, 108, can be seen further securing the tool guard, 96, to the trimmer head, 88. In an embodiment of the present invention, a screw ; or two or more screws, is used to attach the tool guard to the trimmer head. In an embodiment of the present invention, the trimmer head is attached to the tool guard with only the snap-fit fastener and a single screw.

In an embodiment herein, the trimming tool is a line trimmer.

In an embodiment herein, the invention includes a method of attaching a tool guard to a trimming tool by providing a trimming tool having a trimmer head, and providing a tool guard comprising a fixture hole. The trimmer head has a housing, and the housing has a clip. The tool guard is affixed to the housing by inserting the clip into the fixture hole. Together, the clip and the fixture hole form a snap-fit closure.

In an embodiment herein, the invention includes a method of attaching a tool guard to a trimming tool by providing a trimming tool having a trimmer head, and providing a tool guard comprising a clip. The trimmer head has a housing, and the housing has a fixture hole. The tool guard is affixed to the housing by inserting the clip into the fixture hole. Together, the clip and the fixture hole form a snap-fit closure.

In an embodiment of the method herein, the housing further contains a buckle, and the tool guard further contains a buckle hole. The buckle is inserted into the buckle hole, prior to inserting the clip into the fixture hole.

### Rotatable Trimmer Head:

The trimming tool according to the invention contains a pole, a trimmer head, and an adjustment mechanism. The pole contains a second pole end, also referred to as distal pole end, a handle at the second pole end, and a first pole end, also referred to as proximal pole end opposite the handle and the second pole end. The pole has a pole axis running the length of the pole. The trimmer head has an electric motor, a cutting tool operatively-connected to the electric motor, and a housing surrounding the electric motor. The adjustment mechanism connects the pole to the trimmer head, and the adjustment mechanism has a releasably-lockable rotational mechanism and a releasably-lockable pivoting mechanism. The releasably-lockable rotational mechanism allows the trimmer head to rotate about the pole axis of the pole, and the releasably-lockable pivoting mechanism allows adjustment of the angle between the trimmer head and the pole.

In an embodiment herein, the pole contains the locking, telescoping tube described herein.

Fig. 5, the pole has a pole axis, PA, and the cutting tool, 90, defines a cutting plane, CP. The angle, alpha, is the angle between the pole axis, PA, and the cutting plane, CP. An adjustment mechanism, 110, contains a releasably-lockable rotational mechanism, 112, and a releasably-lockable pivoting mechanism, 114. An adjustment switch, 116, allows the user to unlock the rotational mechanism and/or the pivoting mechanism. Without intending to be limited by theory, it is believed that the adjustment switch herein allows a normal trimming tool to be converted into an edging tool. As one skilled in the art understands, a trimming tool is used to cut grass, foliage, etc. when the cutting tool is roughly parallel to the ground. In contrast, an edging tool is used to cut grass, foliage, etc. when the cutting tool is roughly perpendicular to the ground, such as around the edge of sidewalks, etc. Thus, it is believed that the present invention allows a single trimming tool to be used for multiple purposes in a safe and reliable manner.

In an embodiment herein, the adjustment switch is locked while the cutting tool is in use, and will not unlock the rotational mechanism or the pivoting mechanism while the cutting tool and/or the electric motor is in use. In an embodiment herein, when the adjustment switch is activated, the cutting tool and/or the electric motor are deactivated.

In an embodiment herein, the adjustment switch, 116, releases the lock of the rotational mechanism, 112, to allow the user to rotate the trimmer head, 84, relative to the pole, 72, around the pole axis, PA.

In an embodiment herein, the adjustment switch, 116, releases the lock of the pivoting mechanism, 114, to allow the trimmer head, 84, to pivot and thereby adjust the angle, alpha, between the pole axis, PA, and the cutting plane, CP.

In an embodiment herein, alpha, is less than about 90 degrees, or less than about 75 degrees; or from about 75 to about 0 degrees; or from about 60 degrees to about 0 degrees; or from about 60 degrees to about 15 degrees; or from about 50 degrees to about 0 degrees; or from about 50 degrees to about 25 degrees, when in trimming mode; i.e., when the cutting tool is intended to be used parallel to the ground. In an embodiment herein, alpha, is about 0 degrees; or the cutting plane is parallel to the pole axis, PA, when the cutting tool is in edging mode; i.e., when the cutting tool is intended to be used perpendicular to the ground. Thus, in an embodiment of the present invention, alpha is from about 75 degrees to 0 degrees; or from about 60 degrees to about 0 degrees; or from about 50 degrees to about 0 degrees total.

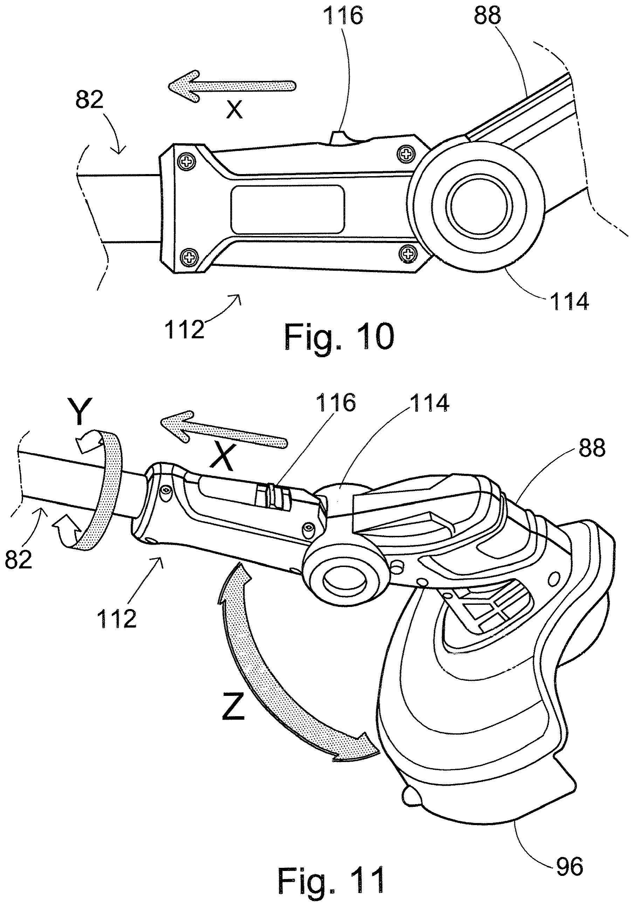

Fig. 10 shows a side view of an embodiment of the pivoting mechanism useful herein. The adjustment switch, 116, is a biased switch that locks and unlocks both the rotational mechanism, 112, and the pivoting mechanism, 114 in place. When the adjustment switch, 116, is untouched, it is biased towards the locked position. When the adjustment switch, 116, is displaced in the direction of the arrow, X, then the (internal) lock disengages and the rotational mechanism, 112, is free to rotate about the first pole end, 82. At the same time, the pivoting mechanism, 114, is also disengaged/unlocked, and the housing, 88, is free to pivot back and forth. When the adjustment switch, 116, is released, then it automatically returns to its biased position, and both the rotational mechanism, 112, and the pivoting mechanism, 114, are again safely locked in place.

In an embodiment herein, the adjustment switch unlocks/locks both the rotational mechanism and the pivoting mechanism.

In an embodiment herein, the adjustment switch contains a separate rotational mechanism switch and a pivoting mechanism switch. In such an embodiment, the rotational adjustment switch locks and unlocks the rotational adjustment mechanism and the pivoting mechanism switch locks and unlocks the pivoting mechanism.

Fig. 11 shows a top perspective view of an embodiment of the pivoting mechanism, 114, and the rotational mechanism, 112. As noted above for Fig. 10, when the adjustment switch, 116, is untouched, it is biased towards the locked position. When the adjustment switch, 116, is displaced, for example, by the user's finger, in the direction of the arrow, X, then the (internal) lock disengages and the rotational mechanism, 112, is free to rotate about the first pole end, 82, in the direction of the arrow, Y. The exact construction of the (internal) rotational mechanism, adjustment switch, and locking/unlocking of the rotational mechanism is not particularly important, as one skilled in the art understands the multiple manners in which such mechanisms may be constructed. It is understood that the rotational mechanism may have a plurality of fixed positions, or may rotate to any number of positions, as desired.

At the same time, when the adjustment switch, 116, is displaced in the direction of the arrow, X, then the (internal) lock disengages and the pivoting mechanism, 114, is also disengaged/unlocked, and the housing, 88, with the attached tool guard, 96, is free to pivot back and forth in the direction of the arrow, Z. This pivoting motion back and forth along the arrow, Z, increases or decreases the angle, α, seen in Fig. 5. In this embodiment, when the adjustment switch, 116, is released, then it automatically returns to its biased position, and both the rotational mechanism, 112, and the pivoting mechanism, 114, are again safely locked in place. The exact construction of the (internal) pivoting mechanism, adjustment switch, and locking/unlocking of the pivoting mechanism is not particularly important, as one skilled in the art understands the multiple manners in which such mechanisms may be constructed. It is understood that the pivoting mechanism may have a plurality of fixed positions, or may pivot to any number of positions, as desired.

In an embodiment herein, the electric motor is engageable only when both the releasably-lockable rotational mechanism and the releasably-lockable pivoting mechanism are locked in place. Such a feature may be either a physical or electrical/software control feature and is intended to prevent accidents and to improve the safety of the trimming tool during use. Such a feature may be provided via various mechanical, electrical and/or software designs as known in the art.

In an embodiment herein, the lockable, telescoping tube herein is combined with the tool guard having a snap-fit fastener herein.

In an embodiment herein, the trimming tool further comprises a tool guard. The tool guard comprises a snap-fit fastener. The tool guard is attached to the housing via a snap-fit fastener

In an embodiment herein, the lockable, telescoping tube herein is combined with the adjustment mechanism herein.

In an embodiment herein, the snap-fit fastener herein is combined with the adjustment mechanism herein.

In an embodiment herein, the lockable, telescoping tube herein is combined with the tool guard having a snap-fit fastener herein and the adjustment mechanism herein.

It should be understood that the above only illustrates and describes examples whereby the present invention may be carried out, and that modifications and/or alterations may be made thereto without departing from the scope of the claims.

## Claims

1. A trimming tool (70) comprising:
A. a pole (72) comprising:
i. a second pole end (74);
ii. a handle (76) at the second pole end (74); and
iii. a first pole end (82) opposite the handle (76),
wherein the pole (72) has a pole axis (PA) running the length of the pole (72);
B. a trimmer head (84) comprising:
i. an electric motor (86);
ii. a cutting tool (90) operatively-connected to the electric motor (86); and
iii. a housing (88) surrounding the electric motor (86); and
C. an adjustment mechanism (110) connecting the pole (72) to the trimmer head (84), the adjustment mechanism (110) comprising:
i. a releasably-lockable rotational mechanism (112); and
ii. a releasably-lockable pivoting mechanism (114),
wherein the releasably-lockable rotational mechanism (112) allows the trimmer head (84) to rotate about the pole axis (PA) of the pole (72), and wherein the releasably-lockable pivoting mechanism (114) allows adjustment of the angle between the trimmer head (84) and the pole (72).

2. The trimming tool (70) according to Claim 1,
wherein the releasably-lockable rotational mechanism (112) allows the trimmer head (84) to rotate to a plurality of fixed positions,
and/or wherein the plurality of fixed positions comprises a fixed position at about 0 degrees and a fixed position at about 180 degrees around the pole axis (PA) from the original position, and/or wherein the releasably-lockable pivoting mechanism (114) allows the angle between the trimmer head (84) and the pole (72) to be adjusted to from about 75 degrees to about 0 degrees, preferably to from about 60 degrees to about 0 degrees,
and/or wherein the releasably-lockable rotational mechanism (112) comprises a locking mechanism,
and/or wherein the releasable-lockable pivoting mechanism (114) comprises a locking mechanism.

3. The trimming tool (70) according to any one of Claims 1 or 2, further comprising a locking, telescoping tube (10) with
A. an outer tube (20) comprising a outer tube first end (22) and a outer tube second end (24) opposite the outer tube first end (22);
B. an inner tube (26) comprising a inner tube first end (28) and a inner tube second end (30) opposite the inner tube first end (28), wherein the inner tube first end (28) is slidably-inserted into the outer tube first end (22);
C. a lower coupler (32) external to the outer tube first end (22);
D. a shaft shield (42) affixed to the inner tube first end (28) via a snap-fit closure (34.2), wherein the shaft shield (42) is slidably-inserted into both the outer tube first end (22) and the lower coupler (32);
E. an upper coupler (40) external to the inner tube (26), wherein the shaft shield (42) is physically blocked from passing into the upper coupler (40), wherein the upper coupler (40) is affixed to the lower coupler (32) via a snap-fit closure (34), and wherein the upper coupler (40) is affixed to the outer tube first end (22) via a snap-fit closure (34.1);
F. a pivot axis (44) connecting the upper coupler (40) and the lower coupler (32);
G. a friction block (52) protruding from the upper coupler (40) and/or the lower coupler (32), wherein the friction block (52) is releasably-pressable against the inner tube (26); and
H. a pressure latch (50) at least partially enclosing the pivot axis (44), wherein when the pressure latch (50) is closed the pressure latch (50) physically presses the friction block (52) against the inner tube (26) so as to restrict movement of the inner tube (26), and wherein when the pressure latch (50) is open the friction block (52) releases pressure from the inner tube (26) thereby allowing the inner tube (26) to slidably-move;
and/or wherein the friction block (52) comprises rubber;
and/or wherein the pressure latch (50) comprises plastic;
and/or wherein the pressure latch (50) comprises a protrusion (54), wherein the protrusion (54) contacts the friction block (52) when the pressure latch (50) is closed, and wherein the protrusion (54) does not contact the friction block (52) when the pressure latch (50) is open;
and/or wherein the pressure latch (50) comprises a latch hole (58), and wherein the pivot axis (44) extends through the latch hole (58);
and/or wherein the protrusion (54) presses the friction block (52) when the pressure latch (50) is closed.

4. The trimming tool (70) according to any one of Claims 1 - 3, wherein the electric motor (86) is engageable only when the releasably-lockable rotational mechanism (112) is locked and the releasably-lockable pivoting mechanism (114) is locked.

5. The trimming tool (70) according to any of claims 1 to 4, further comprising a tool guard (96), wherein the tool guard (96) is attached to the trimmer head (84) via a snap-fit fastener.

6. The trimming tool (70) according to any of claims 1 to 4, wherein the trimmer head (84) is attached to the first pole end (82); the trimming tool (70) further comprising:
a tool guard (96) comprising a snap-fit fastener,
wherein the tool guard (96) is attached to the trimmer head (96) via the snap-fit fastener.

7. The trimming tool (70) according to claim 5 or 6,
wherein the cutting tool (90) is a line,
and/or wherein the line is selected from the group consisting of a plastic line, a nylon line, a metal wire, and a combination thereof,
and/or wherein the trimmer head (84) is attached to the tool guard (96) without any screws or rivets.

8. The trimming tool (70) according to claim 5 or 6, wherein the trimmer head (84) is attached to the tool guard (96) with only the snap-fit fastener and a single screw.

9. The trimming tool (70) according to any one of claims 5 to 8, wherein the housing (88) further comprises a buckle (98), wherein the tool guard (96) comprises a buckle hole (104), wherein the buckle (98) is inserted into the buckle hole (104), and wherein the housing (88) is attached to the tool guard (96) via the snap fit fastener and the buckle (98),
and optionally, wherein the buckle hole (104) further comprises a rubber block (106),
and/or wherein the trimmer head (84) further comprises an assist boss (102) to help align the tool guard (96).

10. A method of attaching a tool guard (96) to a trimming tool (70) according to any of claims 5 to 9 comprising the steps of:
A. providing a trimming tool (70) comprising a trimmer head (84), the trimmer head (84) having a housing (88), wherein the housing (88) comprises a clip (100);
B. providing a tool guard (96) comprising a fixture hole (38); and
C. affixing the tool guard (96) to the housing (88) by inserting the clip (100) into the fixture hole (38).

## Patentansprüche

1. Trimmwerkzeug (70), umfassend:
A. eine Stange (72), umfassend:
i. ein zweites Stangenende (74);
ii. einen Griff (76) an dem zweiten Stangenende (74); und
iii. ein erstes Stangenende (82) gegenüber dem Griff (76),
wobei die Stange (72) eine Stangenachse (PA) aufweist, die entlang der Länge der Stange (72) verläuft;
B. einen Trimmerkopf (84), umfassend:
i. einen Elektromotor (86);
ii. ein Schneidwerkzeug (90), das mit dem Elektromotor (86) wirkverbunden ist; und
iii. ein Gehäuse (88), das den Elektromotor (86) umgibt; und
C. einen Einstellmechanismus (110), der die Stange (72) mit dem Trimmerkopf (84) verbindet, der Einstellmechanismus (110) umfassend:
i. einen lösbar arretierbaren Drehmechanismus (112); und
ii. einen lösbar arretierbaren Schwenkmechanismus (114),
wobei der lösbar arretierbare Drehmechanismus (112) dem Trimmerkopf (84) ermöglicht, sich um die Stangenachse (PA) der Stange (72) zu drehen, und wobei der lösbar arretierbare Schwenkmechanismus (114) eine Einstellung des Winkels zwischen dem Trimmerkopf (84) und der Stange (72) ermöglicht.

2. Trimmwerkzeug (70) nach Anspruch 1,
wobei der lösbar arretierbare Drehmechanismus (112) dem Trimmerkopf (84) ermöglicht, sich in eine Vielzahl von festen Positionen zu drehen, und/oder wobei die Vielzahl von festen Positionen eine feste Position bei etwa 0 Grad und eine feste Position bei etwa 180 Grad um die Stangenachse (PA) herum von der ursprünglichen Position umfasst und/oder wobei der lösbar arretierbare Schwenkmechanismus (114) ermöglicht, den Winkel zwischen dem Trimmerkopf (84) und der Stange (72) auf von etwa 75 Grad bis etwa 0 Grad, vorzugsweise auf von etwa 60 Grad bis etwa 0 Grad einzustellen,
und/oder wobei der lösbar arretierbare Drehmechanismus (112) einen Arretiermechanismus umfasst,
und/oder wobei der lösbare arretierbare Schwenkmechanismus (114) einen Arretiermechanismus umfasst.

3. Trimmwerkzeug (70) nach einem der Ansprüche 1 oder 2, ferner umfassend ein Arretierteleskoprohr (10) mit
A. einem Außenrohr (20), umfassend ein erstes Außenrohrende (22) und ein zweites Außenrohrende (24) gegenüber dem ersten Außenrohrende (22);
B. einem Innenrohr (26), umfassend ein erstes Innenrohrende (28) und ein zweites Innenrohrende (30) gegenüber dem ersten Innenrohrende (28), wobei das erste Innenrohrende (28) in das erste Außenrohrende (22) verschiebbar eingeführt ist;
C. einer unteren Kupplung (32) außerhalb des ersten Außenrohrendes (22);
D. einer Wellenblende (42), die an dem ersten Innenrohrende (28) über einen Schnappverschluss (34.2) befestigt ist, wobei die Wellenblende (42) in sowohl das erste Außenrohrende (22) als auch die untere Kupplung (32) verschiebbar eingeführt ist;
E. einer oberen Kupplung (40) außerhalb des Innenrohrs (26), wobei die Wellenblende (42) physisch daran gehindert wird, in die obere Kupplung (40) zu gehen, wobei die obere Kupplung (40) an der unteren Kupplung (32) über einen Schnappverschluss (34) befestigt ist und wobei die obere Kupplung (40) an dem ersten Außenrohrende (22) über einen Schnappverschluss (34.1) befestigt ist;
F. einer Schwenkachse (44), die die obere Kupplung (40) und die untere Kupplung (32) verbindet;
G. einem Reibungsblock (52), der von der oberen Kupplung (40) und/oder der unteren Kupplung (32) vorsteht, wobei der Reibungsblock (52) gegen das Innenrohr (26) lösbar drückbar ist; und
H. einer Druckverriegelung (50), die mindestens teilweise die Schwenkachse (44) umschließt, wobei, wenn die Druckverriegelung (50) geschlossen ist, die Druckverriegelung (50) den Reibungsblock (52) physisch gegen das Innenrohr (26) drückt, um eine Bewegung des Innenrohrs (26) einzuschränken, und wobei, wenn die Druckverriegelung (50) offen ist, der Reibungsblock (52) Druck aus dem Innenrohr (26) freisetzt, wobei dadurch dem Innenrohr (26) ermöglicht wird, sich verschiebbar zu bewegen;
und/oder wobei der Reibungsblock (52) Gummi umfasst;
und/oder wobei die Druckverriegelung (50) Kunststoff umfasst;
und/oder wobei die Druckverriegelung (50) einen Vorsprung (54) umfasst, wobei der Vorsprung (54) den Reibungsblock (52) berührt, wenn die Druckverriegelung (50) geschlossen ist, und wobei der Vorsprung (54) den Reibungsblock (52) nicht berührt, wenn die Druckverriegelung (50) offen ist;
und/oder wobei die Druckverriegelung (50) ein Verriegelungsloch (58) umfasst und wobei sich die Schwenkachse (44) durch das Verriegelungsloch (58) hindurch erstreckt;
und/oder wobei der Vorsprung (54) auf den Reibungsblock (52) drückt, wenn die Druckverriegelung (50) geschlossen ist.

4. Trimmwerkzeug (70) nach einem der Ansprüche 1 bis 3, wobei der Elektromotor (86) nur einschaltbar ist, wenn der lösbar arretierbare Drehmechanismus (112) arretiert ist und der lösbar arretierbare Schwenkmechanismus (114) arretiert ist.

5. Trimmwerkzeug (70) nach einem der Ansprüche 1 bis 4, ferner umfassend einen Werkzeugschutz (96), wobei der Werkzeugschutz (96) über eine Schnapphalterung an dem Trimmerkopf (84) angebracht ist.

6. Trimmwerkzeug (70) nach einem der Ansprüche 1 bis 4, wobei der Trimmerkopf (84) an dem ersten Stangenende (82) angebracht ist; das Trimmwerkzeug (70) ferner umfassend:
einen Werkzeugschutz (96), umfassend eine Schnapphalterung,
wobei der Werkzeugschutz (96) über die Schnapphalterung an dem Trimmerkopf (96) angebracht ist.

7. Trimmwerkzeug (70) nach Anspruch 5 oder 6,
wobei das Schneidwerkzeug (90) eine Schnur ist,
und/oder wobei die Schnur aus der Gruppe ausgewählt ist, bestehend aus einer Kunststoffschnur, einer Nylonschnur, einem Metalldraht und einer Kombination davon,
und/oder wobei der Trimmerkopf (84) ohne jegliche Schrauben oder Nieten an dem Werkzeugschutz (96) angebracht ist.

8. Trimmwerkzeug (70) nach Anspruch 5 oder 6, wobei der Trimmerkopf (84) nur mit der Schnapphalterung und einer einzigen Schraube an dem Werkzeugschutz (96) angebracht ist.

9. Trimmwerkzeug (70) nach einem der Ansprüche 5 bis 8, wobei das Gehäuse (88) ferner eine Schnalle (98) umfasst, wobei der Werkzeugschutz (96) ein Schnallenloch (104) umfasst, wobei die Schnalle (98) in das Schnallenloch (104) eingeführt ist und wobei das Gehäuse (88) über die Schnapphalterung und die Schnalle (98) an dem Werkzeugschutz (96) angebracht ist,
und optional, wobei das Schnallenloch (104) ferner einen Gummiblock (106) umfasst,
und/oder wobei der Trimmerkopf (84) ferner eine Hilfsnabe (102) umfasst, um dabei behilflich zu sein, den Werkzeugschutz (96) auszurichten.

10. Verfahren zum Anbringen eines Werkzeugschutzes (96) an einem Trimmwerkzeug (70) nach einem der Ansprüche 5 bis 9, umfassend die Schritte:
A. Bereitstellen eines Trimmwerkzeugs (70), umfassend einen Trimmerkopf (84), wobei der Trimmerkopf (84) ein Gehäuse (88) aufweist, wobei das Gehäuse (88) einen Clip (100) umfasst;
B. Bereitstellen eines Werkzeugschutzes (96), umfassend ein Befestigungsloch (38); und
C. Befestigen des Werkzeugschutzes (96) an dem Gehäuse (88) durch Einführen des Clips (100) in das Befestigungsloch (38).

## Revendications

1. Outil de tonte (70) comprenant :
A. une tige (72) comprenant :
i. une seconde extrémité de tige (74) ;
ii. une poignée (76) au niveau de la seconde extrémité de tige (74) ; et
iii. une première extrémité de tige (82) opposée à la poignée (76),
dans lequel la tige (72) a un axe de tige (PA) s'étendant sur la longueur de la tige (72) ;
B. une tête de tondeuse (84) comprenant :
i. un moteur électrique (86) ;
ii. un outil de coupe (90) relié fonctionnellement au moteur électrique (86) ; et
iii. un logement (88) entourant le moteur électrique (86) ; et
C. un mécanisme d'ajustement (110) reliant la tige (72) à la tête de tondeuse (84), le mécanisme d'ajustement (110) comprenant :
i. un mécanisme de rotation verrouillable de manière libérable (112) ; et
ii. un mécanisme pivotant verrouillable de manière libérable (114),
dans lequel le mécanisme de rotation verrouillable de manière libérable (112) permet à la tête de tondeuse (84) d'effectuer une rotation autour de l'axe de tige (PA) de la tige (72), et dans lequel le mécanisme pivotant verrouillable de manière libérable (114) permet un ajustement de l'angle entre la tête de tondeuse (84) et la tige (72).

2. Outil de tonte (70) selon la revendication 1,
dans lequel le mécanisme de rotation verrouillable de manière libérable (112) permet à la tête de tondeuse (84) d'effectuer une rotation vers une pluralité de positions fixes,
et/ou dans lequel la pluralité de positions fixes comprend une position fixe à environ 0 degré et une position fixe à environ 180 degrés autour de l'axe de tige (PA) à partir de la position initiale, et/ou dans lequel le mécanisme pivotant verrouillable de manière libérable (114) permet à l'angle entre la tête de tondeuse (84) et la tige (72) d'être ajusté à une valeur allant d'environ 75 degrés à environ 0 degré, de préférence d'environ 60 degrés à environ 0 degré,
et/ou dans lequel le mécanisme de rotation verrouillable de manière libérable (112) comprend un mécanisme de verrouillage,
et/ou dans lequel le mécanisme pivotant verrouillable de manière libérable (114) comprend un mécanisme de verrouillage.

3. Outil de tonte (70) selon l'une quelconque des revendications 1 ou 2, comprenant en outre un tube télescopique verrouillable (10) avec
A. un tube externe (20) comprenant une première extrémité de tube externe (22) et une seconde extrémité de tube externe (24) opposée à la première extrémité de tube externe (22) ;
B. un tube interne (26) comprenant une première extrémité de tube interne (28) et une seconde extrémité de tube interne (30) opposée à la première extrémité de tube interne (28), dans lequel la première extrémité de tube interne (28) est insérée de manière coulissante dans la première extrémité de tube externe (22) ;
C. un accouplement inférieur (32) externe à la première extrémité de tube externe (22) ;
D. une protection d'arbre (42) attachée à la première extrémité de tube interne (28) par l'intermédiaire d'une fermeture par encliquetage (34.2), dans lequel la protection d'arbre (42) est insérée de manière coulissante à la fois dans la première extrémité de tube externe (22) et dans l'accouplement inférieur (32) ;
E. un accouplement supérieur (40) externe au tube interne (26), dans lequel la protection d'arbre (42) est empêchée physiquement de passer dans l'accouplement supérieur (40), dans lequel l'accouplement supérieur (40) est attaché à l'accouplement inférieur (32) par l'intermédiaire d'une fermeture par encliquetage (34), et dans lequel l'accouplement supérieur (40) est attaché à la première extrémité de tube externe (22) par l'intermédiaire d'une fermeture par encliquetage (34.1) ;
F. un axe de pivotement (44) reliant l'accouplement supérieur (40) et l'accouplement inférieur (32) ;
G. un bloc de friction (52) faisant saillie de l'accouplement supérieur (40) et/ou de l'accouplement inférieur (32), dans lequel le bloc de friction (52) peut être pressé de manière libérable contre le tube interne (26) ; et
H. un verrou à pression (50) enfermant au moins partiellement l'axe de pivotement (44), dans lequel lorsque le verrou à pression (50) est fermé le verrou à pression (50) presse physiquement le bloc de friction (52) contre le tube interne (26) de façon à restreindre un mouvement du tube interne (26), et dans lequel lorsque le verrou à pression (50) est ouvert le bloc de friction (52) libère la pression du tube interne (26) en permettant de ce fait au tube interne (26) de se déplacer de manière coulissante ;
et/ou dans lequel le bloc de friction (52) comprend du caoutchouc ;
et/ou dans lequel le verrou à pression (50) comprend du plastique ;
et/ou dans lequel le verrou à pression (50) comprend une protubérance (54), dans lequel la protubérance (54) vient en contact avec le bloc de friction (52) lorsque le verrou à pression (50) est fermé, et dans lequel la protubérance (54) ne vient pas en contact avec le bloc de friction (52) lorsque le verrou à pression (50) est ouvert ;
et/ou dans lequel le verrou à pression (50) comprend un trou de verrou (58), et dans lequel l'axe de pivotement (44) s'étend à travers le trou de verrou (58) ;
et/ou dans lequel la protubérance (54) presse le bloc de friction (52) lorsque le verrou à pression (50) est fermé.

4. Outil de tonte (70) selon l'une quelconque des revendications 1 à 3, dans lequel le moteur électrique (86) peut venir en prise uniquement lorsque le mécanisme de rotation verrouillable de manière libérable (112) est verrouillé et que le mécanisme pivotant verrouillable de manière libérable (114) est verrouillé.

5. Outil de tonte (70) selon l'une quelconque des revendications 1 à 4, comprenant en outre un cache d'outil (96), dans lequel le cache d'outil (96) est fixé à la tête de tondeuse (84) par l'intermédiaire d'un élément de fixation encliquetable.

6. Outil de tonte (70) selon l'une quelconque des revendications 1 à 4, dans lequel la tête de tondeuse (84) est fixée à la première extrémité de tige (82) ; l'outil de tonte (70) comprenant en outre :
un cache d'outil (96) comprenant un élément de fixation encliquetable,
dans lequel le cache d'outil (96) est fixé à la tête de tondeuse (96) par l'intermédiaire de l'élément de fixation encliquetable.

7. Outil de tonte (70) selon la revendication 5 ou 6,
dans lequel l'outil de coupe (90) est un fil,
et/ou dans lequel le fil est choisi dans le groupe constitué par un fil en plastique, un fil en nylon, un fil métallique, et une combinaison de ceux-ci,
et/ou dans lequel la tête de tondeuse (84) est fixée au cache d'outil (96) sans aucune vis ni aucun rivet.

8. Outil de tonte (70) selon la revendication 5 ou 6, dans lequel la tête de tondeuse (84) est fixée au cache d'outil (96) uniquement avec l'élément de fixation encliquetable et une simple vis.

9. Outil de tonte (70) selon l'une quelconque des revendications 5 à 8, dans lequel le logement (88) comprend en outre un collier (98), dans lequel le cache d'outil (96) comprend un trou de collier (104), dans lequel le collier (98) est inséré dans le trou de collier (104), et dans lequel le logement (88) est fixé au cache d'outil (96) par l'intermédiaire de l'élément de fixation encliquetable et du collier (98),
et facultativement, dans lequel le trou de collier (104) comprend en outre un bloc de caoutchouc (106),
et/ou dans lequel la tête de tondeuse (84) comprend en outre un bossage d'assistance (102) pour aider à aligner le cache d'outil (96).

10. Procédé de fixation d'un cache d'outil (96) à un outil de tonte (70) selon l'une quelconque des revendications 5 à 9 comprenant les étapes consistant à :
A. fournir un outil de tonte (70) comprenant une tête de tondeuse (84), la tête de tondeuse (84) ayant un logement (88), dans lequel le logement (88) comprend une attache (100) ;
B. fournir un cache d'outil (96) comprenant un trou de montage (38) ; et
C. attacher le cache d'outil (96) au logement (88) en insérant l'attache (100) dans le trou de montage (38).
